# EUROPÄISCHE PATENTSCHRIFT

(11) **EP 2 356 636 B1**
(45) Veröffentlichungstag und Bekanntmachung des Hinweises auf die Patenterteilung: **05.09.2018**
(21) Anmeldenummer: 09807488.3
(22) Anmeldetag: 08.12.2009
(51) Int. Cl.: G07D 7/00

(54) **VERFAHREN ZUR AUTHENTIFIZIERUNG UND/ODER IDENTIFIZIERUNG EINES GEGENSTANDS**
METHOD FOR AUTHENTICATING AND/OR IDENTIFYING AN OBJECT
PROCÉDÉ D'AUTHENTIFICATION ET/OU D'IDENTIFICATION D'UN OBJET

(30) Priorität: 08.12.2008 DE 102008060675
(43) Veröffentlichungstag der Anmeldung: 17.08.2011
(73) Patentinhaber: Polysecure GmbH, 79108 Freiburg (DE)
(72) Erfinder: BAQUE, Thomas, 79677 Schönau (DE)
(74) Vertreter: Scholz, Volker
(86) Internationale Anmeldenummer: PCT/DE2009/001722
(87) Internationale Veröffentlichungsnummer: WO 2010/066237

(56) Entgegenhaltungen:
- EP-A1- 1 843 144
- EP-A2- 1 178 429
- US-A- 3 663 813
- US-A- 5 867 586

## Beschreibung

Die vorliegende Erfindung betrifft ein Verfahren zur Authentifizierung und/oder Identifizierung eines Gegenstands, unter anderem zum Nachweis von Originalen bzw. zum Schutz vor Plagiaten, durch den Einsatz eines chemischen Markierungsmittels.

Es ist bekannt, dass technische und andere hochwertige Produkte häufig unerlaubt kopiert werden. Dabei entsteht den einzelnen Unternehmen sowie darüber hinaus der gesamten Wirtschaft ein hoher Schaden. Zudem sind die kopierten Produkte oft von minderer Qualität. Da dem Kunden die Fälschung nicht bewusst ist, projektiert er eventuelle Mängel auf die minderwertige Qualität der Marke; es entsteht mithin auch ein enormer Image-Schaden bei den Herstellern.

Aufgrund der technischen Möglichkeiten können viele Serienprodukte wie z.B. Kunststoffteile, Maschinenteile, Kleidungsstücke heutzutage mindestens makroskopisch praktisch perfekt kopiert werden. Daher ist es häufig schwierig, wenn nicht sogar unmöglich, Originalprodukte und Plagiate voneinander zu unterscheiden, so dass Originalprodukte zur Unterscheidung gezielt, wirksam und wirtschaftlich mit zusätzlichen Merkmalen gekennzeichnet werden müssen.

Nach dem Stand der Technik können zum Kennzeichnen eines Originals vor allem Etiketten an der Oberfläche des Gegenstands angebracht werden. Zur eigentlichen Kennzeichnung müssen solche Etiketten dann offene oder verdeckte Sicherheitsmerkmale besitzen, die eindeutig und reproduzierbar als Authentifizierungscode nachgewiesen bzw. gemessen werden können. Sicherheitsmerkmale können ein bestimmtes Muster (z.B. Barcodes, Hologramme, Mikrographiken, Guillochen), eine bestimmte Farbe, eine elektronische Information (z.B. bei RFID-Chips) und vieles mehr sein.

Nachteile von Etiketten und eine Einschränkung für viele Anwendungen sind die geringe mechanische und thermische Stabilität. Insbesondere können sie durch die Beanspruchung der Oberfläche des gekennzeichneten Gegenstands abgelöst oder beschädigt werden. Darüber hinaus können Etiketten bei kleinen Gegenständen oder Gegenständen wie einem Turbinenflügel, dessen Oberfläche keinerlei Modifikation erlaubt, technisch bedingt nicht angebracht werden. Ferner sind die Etiketten aufgrund ihrer Zugänglichkeit oft kopierbar, so dass kein wirksamer Schutz vor Plagiaten besteht. Darüber hinaus sind die relativ hohen Einzelkosten ein Hemmnis, insbesondere bei Serienprodukten mit hoher Stückzahl und geringem Einzelwert.

Über Etiketten hinaus kennt der Stand der Technik einige Ansätze bzw. Verfahren, die sich mit der direkten Kennzeichnung der Oberfläche eines Gegenstandes befassen. Als Beispiele sind zu nennen: die Schaffung eines Musters oder einer Oberflächenstrukturierung durch Laserablation und ähnliche Verfahren, der gezielte Einbau von fluoreszierenden oder lumineszierenden Substanzen bzw. Pigmenten, der gezielte Einbau von Substanzen, die über eine chemische und/oder biologische Reaktion nachgewiesen werden können. Nachteile und Einschränkung solcher Verfahren sind häufig ebenso die mangelnde mechanische und thermische Stabilität, die Modifikation der Oberfläche, die Zugänglich- und daher Kopierbarkeit und der teilweise hohe Aufwand des Nachweises des Sicherheitsmerkmals.

Über diese Verfahren hinaus kennt der Stand der Technik einige wenige Ansätze, gezielt Elemente und/oder Verbindungen in die Masse eines Gegenstands einzubringen und durch verschiedene Messverfahren nachzuweisen.

So beschreibt EP 1 556 837 B1 ein Verfahren, gemäß dem fluoreszierende Verbindungen in Objekte eingebracht und durch Anregung mit sichtbarem Licht mindestens in Bezug auf Vorhanden- oder Nichtvorhandensein nachgewiesen werden. Das spektroskopische Ergebnis wird mit dem spektroskopischen Ergebnis des Originals (=Authentifizierungscode) verglichen, wodurch der Originalitätsnachweis geführt wird.

DE 100 83 295 T1 beschreibt ein ähnliches Verfahren, wobei hier wenigstens ein Markierungsstoff auf Anregung mit einem Energiestrahl einen Röntgenstrahl emittiert, der markierte Gegenstand ein Teppich ist und der Markierungsstoff durch Beschichtung des Gegenstands eingebracht wird. Das Sicherheitsmerkmal ist die Zusammensetzung des Markierungsstoffs, die über Röntgenfluoreszenz-Analyse gemessen wird.

US 4,445,225 beschreibt ein Verfahren, wobei die im Gegenstand eingebauten Markierungsstoffe sich nicht homogen in der Masse des Gegenstands befinden, sondern an bestimmten Stellen der Oberfläche lokalisiert werden. Hierdurch bezieht sich der Markierungseffekt wie bei der Beschichtung aus DE 100 83 295 T1 nur auf die Oberfläche. Vergleichbar befassen sich DE 44 45 004 A1, DE 196 45 630 A1 und EP 0 911 626 A1 mit dem Nachweis von Markierungsstoffen durch Röntgenfluoreszenz-Analyse. US3663813 beschreibt ferner ein Verfahren zur Markierung von Gegenständen mit einem Code, wobei der Code mit Hilfe von unterscheidlichen Markierungselementen, die jeweils in unterschiedlichen Konzentrationen auftreten können, gebildet wird.

Nicht beschrieben und gelöst gemäß Stand der Technik ist jedoch die gleichzeitige Lösung der für die praktische Anwendung folgenden entscheidenden Probleme bzw. Herausforderungen:
Erstens, ein Verfahren, das Gegenstände, Materialien, Beschichtungen und Ähnliches homogen in ihrer Masse markiert ("bulk effect"), so dass es unerheblich ist, an welcher Stelle oder durch welches Bruchteil des Gegenstands der Nachweis der Markierung durchgeführt wird.

Zweitens, ein Markierungsmittel bzw. Marker, das bzw. der gezielt als vollkommen inerter, thermisch und mechanisch extrem stabiler Zusatz hergestellt wird, der als Ganzes und/oder seine Bestandteile ihre Position und Konzentration im markierten Objekt nicht verändern, also insbesondere nicht diffundieren und/oder extrahieren und/oder in der Masse oder an der Oberfläche des Gegenstands Reaktionen eingehen und/oder auslösen.

Ohne diese obigen Eigenschaften, allein oder in Kombination, kann eine Markierung in Punkto reproduzierbarer, verlässlicher Nachweis, chemisch-strukturelle Stabilität und Inertheit nicht den Anforderungen an ein industrielles (Serien-) Produkt erfüllen. So kann zum Beispiel ein extrahierendes Markierungsmittel nicht nur die Reproduzierbarkeit des Nachweises der Markierung beeinträchtigen, sondern auch ungewollte bis toxische Reaktionen auslösen, die die Anwendung und Zulassung von Produkten beeinträchtigen und/oder aufheben.

Es ist eine Aufgabe der vorliegenden Erfindung, ein Verfahren zur Authentifizierung und/oder Identifizierung eines Gegenstands bereitzustellen, mit dem die genanten Nachteile aus dem Stand der Technik überwunden und die beschriebenen Probleme aus der praktischen Anwendung zumindest teilweise gelöst werden.

Insofern soll ein Verfahren bereitgestellt werden, das die qualitative und/oder quantitative Bestimmung eines chemischen Markierungsmittels erlaubt, das bei der Herstellung des Gegenstands homogen und stabil in der Masse des Gegenstands integriert werden kann.

Auch soll das Verfahren eine verlässliche Bestimmung bzw. Überprüfung eines zuvor festgelegten Verschlüsselungscodes anhand ausgewählter chemischer Elemente und/oder Verbindungen ermöglichen und dies bevorzugt auf der Basis der Konzentration der Elemente und/oder Verbindungen erlauben.

Die Aufgabe wird gelöst durch ein Verfahren mit den Merkmalen von Anspruch 1. Bevorzugte Ausführungsformen ergeben sich aus den Unteransprüchen.

Diese Aufgabe wird gelöst durch ein Verfahren zur Authentifizierung und/oder Identifizierung eines Gegenstands, der ein chemisches Markierungsmittel enthält, das in einem Träger, dem eigentlichen "Marker", im wesentlichen untrennbar eingeschlossen ist und ausgewählte chemische Elemente und/oder Verbindungen, so genannte Markierungselemente, in Konzentrationen gemäß eines festgelegten Verschlüsselungscodes enthält, welches Verfahren die Schritte umfasst:
i) qualitatives und/oder quantitatives Bestimmen der Markierungselemente des chemischen Markierungsmittels, und
ii) Abgleichen der in Schritt (i) bestimmten Werte mit dem festgelegten Verschlüsselungscode.
Dabei ist der Verschlüsselungscode ein numerischer Zahlenwert, der durch die Konzentrationen der Markierungselemente und/oder die Positionen der Markierungselemente innerhalb einer Reihenfolge festgelegt wird.

Der numerische Zahlenwert ist besonders bevorzugt ein Zahlenwert auf Basis des Dezimalsystems.

Auch ist bevorzugt, dass der Verschlüsselungscode festgelegt wird über die Konzentration der Markierungselemente und/oder Positionen der Markierungselemente im Vergleich zu zumindest einem chemischen Bezugselement und/oder einer chemischen Bezugsverbindung.

Die Variante der relativen Konzentrationen ist immer dann sinnvoll, wenn die Konzentration des Markierungsmittels, mithin der Markierungselemente, im zu markierenden Gegenstand nicht kontrolliert werden kann und daher die absoluten Konzentrationen nicht vorher bestimmbar sind. Die relative Einwaage der Markierungselemente und des Bezugselements kann immer vorgenommen werden.

Ein weiterer Vorteil dieser Variante ist, dass durch die Konzentrationsmessung des Bezugselements ggf. die Streckung des chemischen Markierungsmittels und mithin des Materials des Gegenstandes festgestellt werden kann.

Eine bevorzugte Ausführungsform zeichnet sich dadurch aus, dass das chemische Markierungsmittel 4 bis 40 Markierungselemente, bevorzugt 8 bis 24, enthält.

Erfindungsgemäß bevorzugt ist ferner, dass die Markierungselemente jeweils in Konzentrationsbereichen vorliegen, die um den Faktor 1-20, bevorzugt 2-10, voneinander und/oder ggf. von einem Bezugselement abweichen.

Dabei ist bevorzugt, dass die Anzahl der Konzentrationsbereiche die Basis und die Anzahl der Markierungselemente die Potenz des Zahlensystems ergibt, auf das eine Konzentrationsmatrix der Markierungselemente abgebildet wird.

Konzentrationsbereiche sind erfindungsgemäß besonders bevorzugt, die beispielsweise durch Röntgenfluoreszenz-Analyse der Markierungselemente eindeutig differenziert werden können.

Durch das chemische Markierungsmittel kann dann wie folgt eindeutig eine Zahl, nämlich der Authentifizierungscode, generiert werden: Die Anzahl der Konzentrationsbereiche ergibt die Basis eines sinnvollen und dann festgelegten Zahlensystems, z.B. binäres, tertiäres oder quartäres Zahlensystem.

Erfindungsgemäß kann die Basis von 2-10 reichen, bevorzugt von 4-6, das hieße, dass 4-6 Konzentrationsbereiche eindeutig differenziert werden können.

Die Konzentrationen der Markierungselemente werden sodann den Konzentrationsbereichen zugeordnet, was einer Normierung auf das festgelegte Zahlensystem entspricht. Im quartären Zahlensystem fallen die Konzentrationswerte also in vier Konzentrationsbereiche, so dass die Konzentrationen vollständig auf die Ziffern 0 - 3 abgebildet werden.

Aus der Anzahl der verschiedenen Markierungselemente folgt sodann die Potenz bzw. die Anzahl der Stellen des Zahlensystems. Unter den Markierungselementen ist dann nur noch die Position bzw. Stelle des jeweiligen Markierungselements festzulegen, also im quartären System: Nullerstelle, Viererstelle, Sechzehnerstelle usw..

Aus der Analyse der Zusammensetzung und der Konzentration der Markierungselemente ergibt sich also bei gegebenen Konzentrationsbereichen, Zahlensystem und Stelle des einzelnen Markierungselements ein eindeutiger Zahlenwert. Die Originalität eines Gegenstands ist dann gegeben, wenn dieser Zahlenwert dem Zahlenwert des Originals, also dem Authentifizierungscode, entspricht.

Ein Vorteil des erfindungsgemäßen Verfahrens ist, dass die Basis des Zahlensystems und die Stellen der Markierungselemente festgelegt, aber eben auch geändert werden können. Dadurch ergibt sich, dass ein bestimmtes Markierungsmittel je nach Festlegung des Zahlensystems und der Stellen der Markierungselemente mehrere Zahlen abbilden und daher mehrfach eingesetzt werden kann.

Als Markierungselemente werden bevorzugt Metalle eingesetzt, besonders bevorzugt die Elemente der Gruppen II bis VI, einschließlich der Nebengruppen I bis VIII und der Perioden 4 bis 6. Entsprechende Metallverbindungen in Form von Salzen oder Oxiden können ebenfalls eingesetzt werden.

Das Grundmaterial des Markers ist temperatur- und/oder chemikalienbeständig und/oder mechanisch beständig. Es kann aus Glas und/oder Keramik sein.

Zum Einschluss der Markierungselemente in den Marker können die Elemente, Salze oder Oxide zunächst in Wasser aufgeschlämmt oder gelöst werden, woraufhin die Lösung oder Suspension durch Filtrieren, Zentrifugieren und anschließendes Trocknen homogen vermischt wird.

Die so gewonnene Vormischung, mithin das Markierungsmittel, wird nun mit dem Grundmaterial des Markers gemischt und/oder vermahlen und anschließend in einem thermischen Verfahren erfindungsgemäß Glühen, Schmelzen oder Sintern, besonders bevorzugt Schmelzen) zu einer einheitlichen Masse vereint. Die Masse wird durch Brechen und Mahlen und anderen aus dem Stand der Technik bekannten Maßnahmen zu Pulver mit einer definierten Teilchengrößenverteilung verarbeitet. Die Teilchengröße des Markers liegt bei 1 nm bis 5.000 µm, bevorzugt 50 nm bis 200 µm.

Bevorzugt ist auch, dass die Konzentrationen der Markierungselemente im Marker im Bereich von 10-100.000 ppm, bevorzugt 10-1.000 ppm, liegen, auf Basis der Gesamtmenge des Markers.

Der so gewonnene, das chemische Markierungsmittel enthaltende Marker kann zusätzlich mit Oberflächenmodifizierungs- und/oder Dispergierhilfsmitteln versetzt werden. Nach Fertigstellung kann der Marker, in Abhängigkeit der Beschaffenheit des Gegenstands, entweder in das Material des Gegenstands eingebunden oder auf die Oberfläche des Gegenstands aufgebracht werden.

Die zu markierenden Gegenständen umfassen bevorzugt alle Materialien, Beschichtungen, insbesondere Kunststoff, Metall, Lack, Beschichtung, Glas, Keramik, Textilien, Leder, Papier, Pappe und/oder Klebstoff.

Schließlich ist bevorzugt, dass zum qualitativen und/oder quantitativen Bestimmen in Schritt (i) physikalisch-chemische Methoden und/oder nasschemische Methoden eingesetzt werden, bevorzugt Atomabsorptionsspektroskopie (AAS), induktiv-gekoppeltes Plasma (ICP) oder Röntgenfluoreszenz-Analyse (RFA).

Bei vorheriger Analyse des Materials des Werkstoffs und nachfolgender Berücksichtigung dieser Ergebnisse kann durch eine gezielte Einwaage des chemische Markierungsmittels auch eine Kompensation von Grundkonzentrationen erreicht werden, was das so genannte "Grundrauschen" bei der spektroskopischen Analyse deutlich vermindert.

Erfindungsgemäß wurde überraschend festgestellt, dass das vorgeschlagene Verfahren eine verlässliche und eindeutige Identifizierung und Authentifizierung von Gegenständen ermöglicht. Die chemischen Markierungselemente können qualitativ und/oder quantitativ auf einfache Weise bestimmt werden, was dann einen Abgleich mit dem Verschlüsselungscode erlaubt.

Ferner wurde erfindungsgemäß überraschend festgestellt, dass das oben beschriebene Verfahren zur Herstellung des Markers zu Pulvergemischen führt, die in Bezug auf die Verteilung der Größen und Formen der Teilchen eineindeutig sind. Diese Verteilung, mithin die Zusammensetzung der Teilchen des Pulvergemisches, ist eine stochastische Folge der Herstellung des Markers, also insbesondere der Misch-, Schmelz-, Mahl- und Sintervorgänge. Diese Verteilung kann hinreichend genau und differenzierend durch charakterisierende Verfahren wie zum Beispiel die so genannte FFF-Analyse ermittelt werden. Insofern ist jede Markerherstellung einmalig. Kein Marker kann daher reproduziert oder kopiert werden.

Wesentlich für das Verfahren der vorliegenden Erfindung ist die Bereitstellung des chemischen Markierungsmittels in einem Träger, dem Marker, in welchem es wie beschrieben im wesentlichen untrennbar eingeschlossen ist. Dieses Vorgehen führt zu einer Reduzierung der Extrahierbarkeit der chemischen Elemente und/oder Verbindungen. Daher kann es weder zu einer Verarmung der Elemente und Verbindungen im Träger bei ständigem Kontakt mit einem Medium kommen, noch wird das Medium selbst kontaminiert. Dies ist insbesondere bei einem Kontakt des Gegenstands, beispielsweise in Form von Aufbewahrungsbehältern, mit Lebensmitteln oder Bedarfsgegenständen von großer praktischer Bedeutung. Da Gläser und Keramiken als Träger sehr beständig gegen den Angriff fast aller Medien sind, kann die Extraktionsbeständigkeit des chemischen Markierungsmittels deutlich erhöht werden.

Desgleichen wurde überraschend festgestellt, dass die chemische Reaktivität des chemischen Markierungsmittels reduziert wird durch Einschluss im Grundmaterial des Markers bzw. im Marker selbst. Viele Verbindungen von Metallen sind in der Lage, katalytisch zu wirken. Das direkte Einbringen solcher Verbindungen ohne Träger kann daher, insbesondere bei reaktiven Systemen (z.B. Polyesterharze, Epoxidharze, etc.), eine ungewollte Reaktion auslösen und/oder die Haltbarkeit der Systeme bzw. von Vorprodukten deutlich reduzieren.

Besteht das Material des Gegenstands aus Kunststoff, so kann der Marker je nach Art des Kunststoffs durch Dispergieren (Suspension in einer Kunststofflösung, Extrusion, Kneten, etc.) in die Masse eingebracht werden. Die Konzentration im Kunststoff beträgt dabei bevorzugt 0,05-5 Gew.-%, bevorzugt 0,1-0,5 Gew.-%, basierend auf dem Gewicht des Kunststoffs. Zur Verbesserung der Dispergierung kann zunächst ein Konzentrat des Markers hergestellt und dieses anschließend mit dem Kunststoff in allen gängigen Verarbeitungsverfahren, wie Extrudieren, Spritzgießen, Kalandrieren, Spinnen, etc. vermischt werden. Entsprechende Verfahren sind im Stand der Technik bekannt.

Bei der Verwendung von Beschichtungsstoffen (z.B. Farben, Lacke, Tinte oder sonstige Beschichtungen) kann das chemische Markierungsmittel oder der Marker dem Beschichtungsstoff direkt bei der Herstellung zugegeben werden, wobei vorzugsweise eine Dispergierung zusammen mit den zur Herstellung der Beschichtungsstoffe erforderlichen Pigmenten und/oder Füllstoffen erfolgt. Die Dispergierung kann mit den zur Herstellung der Beschichtungsstoffe üblichen Geräten erfolgen. Die Konzentration im System beträgt bevorzugt 0,1 bis 10 Gew.-%, bevorzugter 0,5 bis 2 Gew.-%, basierend auf der Gesamtmenge der Beschichtungsstoffe.

Zur Verbesserung der Dispergierung kann zunächst eine Paste - vor Dispergierung in einem geeigneten Lösungsmittel - hergestellt werden. Dazu können übliche, dem Fachmann bekannte Geräte, wie z.B. Dissolver, Kneter, Dreiwalze, Perlmühlen, Mischer, Rührwerke etc. verwendet werden. Der Beschichtungsstoff wird wie gewöhnlich durch Lackieren, Spritzen, Plastifizieren, Tauchlackieren, Drucken oder andere dem Fachmann bekannte Verfahren auf den Gegenstand aufgebracht.

Zur Analyse eines Gegenstands - z.B. zum Nachweis dessen Originalität - wird an zumindest einem Teil des Gegenstands die Zusammensetzung und Konzentration des chemischen Markierungsmittels bestimmt. Bevorzugt werden physikalisch-chemische Methoden, wie z.B. Atomabsorptionspektroskopie (AAS), induktiv gekoppeltes Plasma (ICP) oder Röntgenfluoreszenzanalyse (RFA).

In der Regel kann die Zusammensetzung und Konzentration direkt, ohne weitere chemische oder physikalische Aufbereitung, gemessen werden. Zusätzlich ist aber auch die gezielte Anreicherung des Markers und des chemischen Markierungsmittels mittels dem Fachmann geläufiger Methoden möglich. Die Anreicherung kann z.B. durch Auflösen eines Teils des Gegenstands oder des Beschichtungsstoffs in einem geeigneten Lösungsmittel und Abtrennung des Markers und Markierungsmittels über Filtration, Zentrifugation oder andere Verfahren erfolgen. Alternativ ist auch die Veraschung des Gegenstands möglich. Die Bestimmung der Elementanteile erfolgt nach den gleichen Methoden wie bei der direkten Analyse.

Ein wesentlicher Vorteil des erfindungsgemäßen Verfahrens besteht darin, das chemische Markierungsmittel in verschiedenen Substraten bzw. Gegenständen verwenden zu können. Dadurch können Gegenstände, die aus verschiedenen Werkstoffen bestehen, mit dem gleichen chemischen Markierungsmittel geschützt werden.

Weitere Merkmale und Vorteile des erfindungsgemäßen Verfahrens ergeben sich aus der nachfolgenden Beschreibung eines Ausführungsbeispiels.

Im folgenden wird zunächst beschrieben, wie beispielhaft ein Verschlüsselungscode nach Auswahl bestimmter chemischer Elemente in unterschiedlichen Konzentrationen unter Zuhilfenahme eines binären Zahlensystems erstellt werden kann.

Für die Herstellung eines chemischen Markierungsmittels sollen insgesamt acht chemische Elemente eingesetzt werden, die in Tabelle 1 unten auf der linken Seite angegeben sind. Diese Elemente sind Titan, Vanadium, Chrom, Mangan, Kobalt, Nickel, Gallium und Arsen. Unter Zugrundelegung des binären Zahlensystems soll dabei bspw. die Position von Arsen der BIT-Nummer 1 entsprechen. Dies entspricht im Dezimalsystem der Nullerstelle. Die Zuordnung der Elemente zu den weiteren BIT-Nummern und damit die Reihenfolge der Elemente zur Bestimmung des Verschlüsselungscodes ergibt sich somit ebenfalls aus der linken Spalte von Tabelle 1. Beispielsweise entspricht Chrom der BIT-Nummer 6. Wenn die Chromkonzentration dem Wert 1 entspricht, so ergibt sich 1 mal 2^6, also die Zahl 32.

Die ausgewählten acht Elemente können in zwei unterschiedlichen Konzentrationsbereichen vorliegen, nämlich in einem Konzentrationsbereich von etwa 1.000 ppm oder einem

Konzentrationsbereich von etwa 10.000 ppm. Liegt ein chemisches Element im chemischen Markierungsmittel in einer Konzentration von etwa 1.000 ppm vor, so wird dieser Konzentration der binäre Zahlenwert "0" zugeordnet. Liegen chemische Elemente in einer Konzentration von etwa 10.000 ppm vor, wird dieser Konzentration der binäre Zahlenwert "1" zugeordnet.

Da im vorliegenden Beispiel insgesamt zwei Konzentrationsbereiche vorliegen, ist die Basis des Zahlensystems 2, so dass sich entsprechend der Einsatz eines binären Zahlensystems ergibt. Die Potenz dieses Zahlensystems ist 8, da insgesamt 8 chemische Elemente vorhanden sind.

**Tabelle 1**

| Elemente | | | | Konzentration | | | |
|---|---|---|---|---|---|---|---|
| | | | | | | | |
| | BIT Nr. | Element | | | Level | Konzentration | |
| | | | | | 0 | 1000 ppm | |
| | 8 | Titan | | | 1 | 10000 ppm | |
| | 7 | Vanadium | | | | | |
| | 6 | Chrom | | | | | |
| | 5 | Mangan | | | | | |
| | 4 | Kobalt | | | | | |
| | 3 | Nickel | | | | | |
| | 2 | Gallium | | | | | |
| | 1 | Arsen | | | | | |
| | | | | | | | |

Die folgende Tabelle 2 gibt nochmals eine Übersicht, wie die ausgewählten chemischen Elemente in einer Reihenfolge unter Berücksichtigung der BIT-Nummern und der zugehörigen Dezimalzahlenwerte angeordnet werden. Ferner sind aus Tabelle 2 die Konzentrationen der chemischen Elemente ersichtlich, die zur Herstellung des chemischen Markierungsmittels beispielhaft vorgesehen werden sollen. Beispielsweise soll Titan in einer Konzentration von 10.000 ppm vorliegen, während Chrom, Nickel und Arsen in einer Konzentration von 2.000 ppm eingesetzt werden sollen. Eine Konzentration von 2.000 ppm wird dabei auf den Konzentrationsbereich von 1.000 ppm abgerundet, so dass auch Konzentrationen von 2.000 ppm der binäre Zahlenwert "0" zugeordnet wird.

**Tabelle 2**

| Position | BIT 8 | BIT 7 | BIT 6 | BIT 5 | BIT 4 | BIT 3 | BIT 2 | BIT 1 |
|---|---|---|---|---|---|---|---|---|
| Element | Ti | V | Cr | Mn | Co | Ni | Ga | As |
| Wert | 128 | 64 | 32 | 16 | 8 | 4 | 2 | 1 |
| Konzentration ppm | 10000 | 10000 | 2000 | 10000 | 10000 | 2000 | 10000 | 2000 |

Die in Tabelle 2 gezeigte beispielhafte Ausführungsform des Markierungsmittels soll nach Umrechnung des binären Zahlensystems in das Dezimalzahlensystem einen Zahlenwert von "218" aufweisen, der unter Berücksichtigung der in Tabelle 5 aufgeführten Zustände 0 und 1 der Konzentrationen durch Addition der entsprechend diesen Zuständen zugeordneten Elementenwerte ermittelt wird.

Im vorliegenden Beispiel werden zur Herstellung von 100 g eines Markers, der die Markierungselemente enthält, 90,1529 g Glaspulver (Soda-Kalk-Glas) mit den in Tabelle 3 aufgeführten Markierungselementen (Titanoxid, Divanadiumtrioxid, Dichromdioxid, Dimangantrioxid, Trikobalttetroxid, Nickeloxid, Digalliumtrioxid und Arsentetroxid) in den angegeben Konzentrationen vermischt. Zusätzlich werden 2,000 g Zinkoxid als Flussmittel zugegeben (nicht dargestellt).

Im vorliegenden Beispiel werden demnach die Absolutkonzentrationen der chemischen Elemente und/oder Verbindungen sowie deren Reihenfolge zur Festlegung eines Verschlüsselungscodes herangezogen. Die Mischung wurde unter Zuhilfenahme von Wasser und Isopropanol beispielsweise mit einer Kugelmühle fein zermahlen. Die Mischung wurde dann zentrifugiert und im Trockenschrank getrocknet. Anschließend wurde das Gemisch in einen Tiegel gefüllt und im Tiegelofen bei 1.500°C zu einer homogenen Masse verschmolzen.

Die Schmelze wurde dann vorsichtig in ein mit reichlich Wasser gefülltes Becken gegossen. Das dabei entstehende Granulat wurde zunächst mit einem Backenbrecher grob zerkleinert und dann mittels einer Kugelmühle zu einem feinen Pulver mit einer maximalen Teilchengröße von 2 µm vermahlen.

Die Konzentrationen der Elemente, die eingesetzten chemischen Verbindungen, sowie deren Einwaage ergeben sich aus Tabelle 3.

**Tabelle 3**

| Element | Ti | V | Cr | Mn | Co | Ni | Ga | As |
|---|---|---|---|---|---|---|---|---|
| Konzentration ppm | 10000 | 10000 | 2000 | 10000 | 10000 | 2000 | 10000 | 2000 |
| Stoff | TiO₂ | V₂O₃ | Cr₂O₃ | Mn₂O₃ | Co₃O₄ | NiO | Ga₂O₃ | AsO₄ |
| Konzentration % | 1,2519 | 1,4711 | 0,2923 | 1,4368 | 1,3620 | 0,2545 | 1,3442 | 0,3708 |
| **Einwaage g** | **1,2519** | **1,4711** | **0,2923** | **1,4368** | **1,3620** | **0,2545** | **1,3442** | **0,3708** |

Die in Tabelle 4 dargestellte Rezeptur dient der Herstellung eines Polyamidwerkstoffs, zum Beispiel zur Verwendung für Formstücke aus nicht-metallischen oder nicht-metallischen und metallischen Elementen, der mit dem Marker aus dem oben aufgeführten Ausführungsbeispiel (Tabelle 1) versehen werden soll. Das Gemisch wird in einem Doppelschneckenextruder bei einer Massetemperatur von 240-250°C aufgeschmolzen und dispergiert. Die Masse wird mit einer Strangdüse ausgetragen, im Wasserbad abgekühlt und anschließend granuliert. Der so hergestellte Compound kann zu Fertigteilen verarbeitet werden.

**Tabelle 4**

| Stoff | Handelsbezeichnung Beispiel | % Anteil |
|---|---|---|
| Polyamid 6 | Ultramid® B3 (BASF) | 96,0 |
| Calziumstearat | Calziumstearat 800 (Greven) | 1,0 |
| Wärmestabilisator | Irganox® 1098 (Ciba) | 0,5 |
| Farbmittel | Printex® 60 (Degussa) | 0,5 |
| Marker | | 2,0 |

Zum Nachweis des im obigen Beispiel hergestellten chemischen Markers im Polyamidwerkstoff werden im Rahmen der Analyse etwa 10 g Polyamidwerkstoff in Trifluorethanol gelöst. Der Rückstand wird abzentrifugiert, mit Trifluorethanol aufgeschlämmt und wieder abzentrifugiert. Mittels eines Presshilfsmittels wird eine Tablette hergestellt. Der Gehalt der im chemischen Markierungsmittel verwendeten Elemente wird mittels RFA bestimmt. Tabelle 5 zeigt die entsprechenden Analyseergebnisse. Die festgestellten Konzentrationen der einzelnen Elemente werden in binäre Zahlenwerte, je nach Abhängigkeit des Konzentrationsbereichs, umgerechnet. Durch die richtige Stelle der BIT-Nummern können die binären Zahlenwerte "0" und "1" dann in Dezimalzahlenwerte umgerechnet werden, was schließlich in einem Gesamtzahlenwert von 218 resultiert. Dieser Gesamtzahlenwert von 218 entspricht dem ursprünglich beabsichtigten Dezimalzahlenwert.

**Tabelle 5**

| Sequenz | BIT 8 | BIT 7 | BIT 6 | BIT 5 | BIT 4 | BIT 3 | BIT 2 | BIT 1 | |
|---|---|---|---|---|---|---|---|---|---|
| Element | Ti | V | Cr | Mn | Co | Ni | Ga | As | |
| Wert | 128 | 64 | 32 | 16 | 8 | 4 | 2 | 1 | |
| Konzentration ppm | 9645 | 10560 | 1880 | 10800 | 11050 | 2034 | 10211 | 1920 | |
| High/Low | 1 | 1 | 0 | 1 | 1 | 0 | 1 | 0 | |
| **Code** | **128** | **64** | **0** | **16** | **8** | **0** | **2** | **0** | **218** |

Wie aus den aufgeführten Beispielen ersichtlich ist, kann mit dem erfindungsgemäßen Verfahren somit auf einfache und effektive Weise eine Authentifizierung und/oder Identifizierung eines Gegenstands durchgeführt werden. Ein chemisches Markierungsmittel wird dazu in einem Träger im wesentlichen untrennbar eingeschlossen und im Material des Gegenstandes integriert. Das chemische Markierungsmittel enthält ausgewählte chemische Elemente und/oder Verbindungen in Konzentrationen auf Basis eines festgelegten Verschlüsselungscodes. Dabei ist der festgelegte Verschlüsselungscode bevorzugt ein numerischer Zahlenwert, der durch die Konzentrationen der ausgewählten Markierungselemente und deren Stellen im Zahlensystem festgelegt wird. Bei Kenntnis des Verschlüsselungscodes kann durch Analyse des Materials eines Gegenstands auf einfache Weise festgestellt werden, ob es sich bei dem Gegenstand um ein Original oder Plagiat handelt.

Die in den Ansprüchen und in der Beschreibung offenbarten Merkmale können sowohl einzeln als auch in beliebiger Kombination zur Verwirklichung der Erfindung in ihren verschiedenen Ausführungsformen wesentlich sein.

## Patentansprüche

1. Verfahren zur Authentifizierung und/oder Identifizierung eines Gegenstands, welches Verfahren die Schritte umfasst:
i) Bereitstellen eines Gegenstandes, der ein chemisches Markierungsmittel enthält, das in einem Marker als Träger im wesentlichen untrennbar eingeschlossen ist und ausgewählte chemische Elemente und/oder Verbindungen, so genannte Markierungselemente, in Konzentrationen gemäß eines festgelegten Verschlüsselungscodes enthält, wobei der Verschlüsselungscode ein numerischer Zahlenwert ist, der durch die Konzentration der Markierungselemente oder durch die Konzentration der Markierungselemente und die Positionen der Markierungselemente innerhalb einer Reihenfolge festgelegt wird,
ii) qualitatives und/oder quantitatives Bestimmen der Markierungselemente des chemischen Markierungsmittels, und
iii) Abgleichen der in Schritt (ii) bestimmten Werte mit dem festgelegten Verschlüsselungscode, wobei
das Material des Markers temperatur- und/oder chemikalienbeständig und/oder mechanisch beständig ist und die Markierungselemente durch Glühen, Sintern oder Schmelzen mit dem Grundmaterial des Markers im wesentlichen untrennbar im Marker eingeschlossen werden.

2. Verfahren nach Anspruch 1, **dadurch gekennzeichnet, dass** der Verschlüsselungscode festgelegt wird über die Konzentrationen der Markierungselemente und/oder Positionen der Markierungselemente im Vergleich zu zumindest einem chemischen Bezugselement und/oder einer chemischen Bezugsverbindung.

3. Verfahren nach einem der vorangehenden Ansprüche, **dadurch gekennzeichnet, dass** das chemische Markierungsmittel 4 bis 40 Markierungselemente, bevorzugt 8 bis 24, enthält.

4. Verfahren nach einem der vorangehenden Ansprüche, **dadurch gekennzeichnet, dass** die Markierungselemente jeweils in Konzentrationsbereichen vorliegen, die um den Faktor 1-20, bevorzugt 2-10, voneinander und/oder ggf. von einem Bezugselement abweichen.

5. Verfahren nach Anspruch 4, **dadurch gekennzeichnet, dass** die Anzahl der Konzentrationsbereiche die Basis und die Anzahl der Markierungselemente die Potenz eines Zahlensystems ergibt, auf das eine Konzentrationsmatrix der Markierungselemente abgebildet wird.

6. Verfahren nach Anspruch 5, **dadurch gekennzeichnet, dass** als Basis der Bereich von 2-10 dient, bevorzugt 4-6.

7. Verfahren nach einem der vorangehenden Ansprüche, **dadurch gekennzeichnet, dass** die Konzentrationen der Markierungselemente im Marker im Bereich von 10-100.000 ppm, bevorzugt 10-1.000, liegt, auf Basis der Gesamtmenge des Markers.

8. Verfahren nach Anspruch 1, **dadurch gekennzeichnet, dass** das Grundmaterial des Marker aus Glas und/oder Keramik ist.

9. Verfahren nach einem der vorangehenden Ansprüche, **dadurch gekennzeichnet, dass** der Marker eine Teilchengröße von 1 nm-5.000 µm, bevorzugt 50 nm-200 µm, aufweist.

10. Verfahren nach einem der vorangehenden Ansprüche, **dadurch gekennzeichnet, dass** der zu markierende Gegenstand Kunststoff, Metall, Lack, Beschichtung, Glas, Keramik, Textilien, Leder, Papier, Pappe und/oder Klebstoff umfasst.

11. Verfahren nach einem der vorangehenden Ansprüche, **dadurch gekennzeichnet, dass** zum qualitativen und/oder quantitativen Bestimmen in Schritt (i) physikalisch-chemische Methoden und/oder nasschemische Methoden eingesetzt werden, bevorzugt Atomabsorptionsspektroskopie (AAS), induktiv-gekoppeltes Plasma (ICP) oder Röntgenfluoreszenzanalyse (RFA).

## Claims

1. Method for authenticating and/or identifying an article, this method comprising the following steps:
i) providing an article which contains a chemical marking agent that is enclosed essentially inseparably in a marker as carrier and contains selected chemical elements and/or compounds, so-called marker elements, in concentrations according to a predetermined encryption code, wherein the encryption code is a numerical value that is established by the concentration of the marker elements or by the concentration of the marker elements and their positions within a series,
ii) qualitatively and/or quantitatively identifying the marker elements of the chemical marking agent, and
iii) comparing the values identified in step (ii) with the predetermined encryption code,
wherein
the material of the marker is resistant to temperature and/or chemicals and/or is mechanically resistant, and the marker elements are essentially inseparably enclosed in the marker by annealing, sintering or melting with the basic material of the marker.

2. Method according to claim 1, **characterised in that** the encryption code is established via the concentrations of marker elements and/or positions of the marker elements compared with at least one chemical reference element and/or a chemical reference compound.

3. Method according to one of the preceding claims, **characterised in that** the chemical marking agent contains 4 to 40 marker elements, preferably 8 to 24.

4. Method according to one of the preceding claims, **characterised in that** the marker elements are present in each case in concentration ranges which differ from one another and/or a reference element by a factor of 1-20, preferably 2-10.

5. Method according to claim 4, **characterised in that** the number of concentration ranges yields the basis and the number of marker elements yields the power of a numerical system on which a concentration matrix of the marker elements is mapped.

6. Method according to claim 5, **characterised in that** the range of 2-10, preferably 4-6, serves as the basis.

7. Method according to one of the preceding claims, **characterised in that** the concentrations of the marker elements in the marker lie in the range of 10-100,000 ppm, preferably 10-1,000, on the basis of the total amount of the marker.

8. Method according to claim 1, **characterised in that** the basic material of the marker is made of glass and/or a ceramic material.

9. Method according to one of the preceding claims, **characterised in that** the marker has a particle size of 1 nm-5,000 µm, preferably 50 nm-200 µm

10. Method according to one of the preceding claims, **characterised in that** the article to be marked comprises plastic, metal, paint, coating, glass, ceramics, textiles, leather, paper, cardboard and/or adhesive.

11. Method according to one of the preceding claims, **characterised in that** for the qualitative and/or quantitative identification in step (i), physico-chemical methods and/or wet-chemical methods are used, preferably atom absorption spectroscopy (AAS), inductively coupled plasma (ICP) or X-ray fluorescence analysis (XRF).

## Revendications

1. Procédé d'authentification et/ou d'identification d'un objet, le procédé consistant à :
i) Fournir un objet qui contient un agent de marquage chimique qui est inclus dans un marqueur en tant que support d'une manière sensiblement non amovible, et contient des éléments et/ou composés chimiques, dits éléments de marquage, sélectionnés en des concentrations reposant sur un code de cryptage établi, ledit code de cryptage étant une valeur numérique établie par la concentration des éléments de marquage ou par la concentration des éléments de marquage et la position des éléments de marquage dans un suite ;
ii) déterminer qualitativement et/ou quantitativement les éléments de marquage de l'agent de marquage chimique ; et
iii) mettre en correspondance les valeurs obtenues à l'étape ii) avec le code de cryptage établi,
le matériau du marqueur étant résistant aux températures et/ou aux produits chimiques et/ou mécaniquement résistant et les éléments de marquage étant inclus dans le marqueur d'une manière sensiblement non amovible par recuit, frittage ou fusion.

2. Procédé selon la revendication 1, **caractérisé en ce que** le code de cryptage est établi par la concentration des éléments de marquage et/ou la position des éléments de marquage par rapport à au moins un élément chimique de référence et/ou un composé chimique de référence.

3. Procédé selon l'une quelconque des revendications précédentes, **caractérisé en ce que** l'agent de marquage chimique contient 4 à 40 éléments de marquage, de préférence 8 à 24.

4. Procédé selon l'une quelconque des revendications précédentes, **caractérisé en ce que** chacun des éléments de marquage se trouve dans des plages de concentration qui varient d'un facteur 1 à 20, de préférence 2 à 10 les unes par rapport aux autres et/ou, le cas échéant, par rapport à un élément de référence.

5. Procédé selon la revendication 4, **caractérisé en ce que** le nombre de plages de concentration indique la base et le nombre d'éléments de marquage indique la puissance d'un système de numération qui sert de base pour reproduire une matrice de concentration des éléments de marquage.

6. Procédé selon la revendication 5, **caractérisé en ce que** la plage servant de base s'étend de 2 à 10, de préférence de 4 à 6.

7. Procédé selon l'une quelconque des revendications précédentes, **caractérisé en ce que** les concentrations des éléments de marquage dans le marqueur sont comprises entre 10 et 100 000 ppm, de préférence entre 10 et 1 000, sur la base de la quantité totale de marqueur.

8. Procédé selon la revendication 1, **caractérisé en ce que** le matériau de base du marqueur est du verre et/ou de la céramique.

9. Procédé selon l'une quelconque des revendications précédentes, **caractérisé en ce que** le marqueur présente une taille de particule comprise entre 1 nm et 5 000 µm, de préférence entre 50 nm et 200 µm.

10. Procédé selon l'une quelconque des revendications précédentes, **caractérisé en ce que** l'objet à marquer comprend de la matière plastique, du métal, de la peinture, une couche de revêtement, du verre, de la céramique, des matières textiles, du cuir, du papier, du carton et/ou de la colle.

11. Procédé selon l'une quelconque des revendications précédentes, **caractérisé en ce que** des méthodes physico-chimiques et/ou chimiques humides, de préférence la spectroscopie d'absorption atomique (SAA), le plasma à couplage inductif (ICP) ou la spectrométrie de fluorescence des rayons X (SFX) sont appliquées pour la détermination qualitative et/ou quantitative de l'étape i).
